# EUROPEAN PATENT APPLICATION

(11) **EP 4 083 914 A1**
(43) Date of publication of application: **02.11.2022**
(21) Application number: 21171219.5
(22) Date of filing: 29.04.2021
(51) Int. Cl.: G06T 7/00

(54) **IMAGE PROCESSING DEVICE AND METHOD**

(71) Applicant: Koninklijke Philips N.V., 5656 AG Eindhoven (NL)
(72) Inventor: BOUSSO, Alex, 5656 AE Eindhoven (NL); KAM, Yossi, 5656 AE Eindhoven (NL); YEHEZKELY, Shelly Theodora, 5656 AE Eindhoven (NL)
(74) Representative: Philips Intellectual Property & Standards

(57) **Abstract**

The present invention relates to an image processing device and method. The device comprises circuitry configured to carry out the steps of applying a volumetric segmentation on a first volume image of an area of examination including an object of interest to segment said object; determining distances from a first contour of the segmented object in the first volume image based on a predetermined threshold; deriving a two-dimensional image from the first volume image in a desired plane through the first volume image; and visualizing the derived two-dimensional image and the determined distances from the first contour of the segmented object in the derived two-dimensional image.

## Description

### FIELD OF THE INVENTION

The present invention relates to an image processing device and a corresponding image processing method, in particular for quantification and visualization of distances between volumes of interest (VOIs).

### BACKGROUND OF THE INVENTION

Complete tumor removal remains challenging in clinical practice. Non-radical primary tumor resection is the main risk factor for local recurrence. Neoplastic cells within surgical margins are found in 20-30% of patients after local breast resection cancer, with majority of them being subjected to reoperation. It raises overall costs of treatment, as well as the rate of postoperative complications.

It has meanwhile become known that the pattern of tumor invasion is suggested to influence the adequacy of margin resection. It is implicated that in tumors that invade deeply as nests and cords of cells require a wider margin than tumors with broad and flat-pushing invasive front. Currently, "1-cm three-dimensional margin" that reflects into >5 mm of pathological margin is highly recommended. Hence, to obtain an overall margin >5 mm, the clinical margin for resection should be clearly defined.

In clinical practice, planning of the resection margin prior procedure planning is essential for the treatment success. However, planning a 5mm resection margin, per slice in the 2D visualization, may cause underestimation of resection margins. In addition, an evaluation of the accuracy of the procedure in terms of 5mm resection success has the same 2D limitation.

### SUMMARY OF THE INVENTION

It is an object of the present invention to provide an image processing device and an image processing method that allow the quantification and visualization of distances between VOIs.

In a first aspect of the present invention an image processing device is presented comprising circuitry configured to carry out the steps of
- applying a volumetric segmentation on a first volume image of an area of examination including an object of interest to segment said object;
- determining distances from a first contour of the segmented object in the first volume image based on a predetermined threshold;
- deriving a two-dimensional image from the first volume image in a desired plane through the first volume image; and
- visualizing the derived two-dimensional image and the determined distances from the first contour of the segmented object in the derived two-dimensional image.

In a further aspect of the present invention a corresponding image processing device is presented.

In yet further aspects of the present invention, there are provided a corresponding method, a computer program which comprises program code means for causing a computer to perform the steps of the method disclosed herein when said computer program is carried out on a computer as well as a non-transitory computer-readable recording medium that stores therein a computer program product, which, when executed by a processor, causes the method disclosed herein to be performed.

Preferred embodiments of the invention are defined in the dependent claims. It shall be understood that the claimed method, system, computer program and medium have similar and/or identical preferred embodiments as the claimed system, in particular as defined in the dependent claims and as disclosed herein.

Visualization of 3D distances in 2D slices (i.e., 2D images through a 3D image data set of an area of examination (e.g. the abdomen, brain, heart region, etc.) is not intuitive. The distance between two VOIs is defined, for each point on the VOI's surface, as follows: Given a point on the surface of the first VOI, the closest point on the surface of the second VOI is found and the 3D Euclidean distance between them is computed. When the corresponding points are in the same slice, displaying the distance between them is straightforward, and it is possible to highlight the regions in which the distance is different (i.e., smaller or larger) than the predefined threshold. However, when those points are not in the same slice, it is difficult to interpret where the regions with small distance lie.

In order to overcome this inherent problem, the present invention presents an approach that determines and visualizes (e.g. optionally highlights) on the 2D slices the 3D regions in which the distance is different from (e.g. less than) the predefined threshold.

This visualization, e.g. in the form of a 2D margins map on the actual 2D slices, to identify a relevant distant (e.g. the relevant 5mm distance in the example given above) to evaluate the tumor's (or other tissues of interest) relevant margins pre, during and/or post procedure represents a valuable tool for planning, estimation and/or evaluation of the treatment success.

In an embodiment the circuitry is further configured to generate a first distance map based on the determined distances indicating the area between the first contour of the segmented object in the first volume image and an envelope (also called shell) around the first contour defined by the determined distances. The area indicated by the first distance map in the derived two-dimensional image can then be visualized as proposed in a further embodiment so that a user (e.g. a physician or planning staff that plans an intervention) can easily recognize areas where the actual distance is different from the predetermined threshold and thus e.g. modify the planning or change any settings or parameters.

According to another embodiment the circuitry is further configured to receive a user input setting the predetermined threshold or to use a default threshold or a threshold defined in advance. Hence, one or more different options may be available to make or change a setting of the predetermined threshold. The threshold may e.g. be different for different kinds of interventions, VOIs, patients, etc. and may thus be individually adapted for the individual patient.

The present invention may particularly be applied in scenarios in which the object of interest is a some tissue volume of interest, such as tumor tissue or an organ (e.g. a particular organ to be treated in some way or to be subjected to a resection), wherein the circuitry is further configured to determine the distances as margins needed for an intervention or planning, in particular an ablation, a radiation and/or a resection (or other interventions such as retracting a probe by a biopsy needle, injecting a medication, etc.).

In another embodiment the circuitry is further configured to carry out the steps of
- applying a volumetric segmentation on a second volume image of said area of examination to segment said object of interest, said second volume image being acquired at a later point in time than the first volume image;
- registering the first and second volume images;
- determining deviations between a second contour of the segmented object in the second volume image and the determined distances from the first contour of the segmented object in the first volume image; and
- visualize the deviations in the derived two-dimensional image in addition to the determined distances from the first contour of the segmented object.

This embodiment particularly enables checking the success of an intervention by essentially comparing the actual result of the intervention against the planning.

In a further embodiment the circuitry is further configured to generate a second distance map based on the determined deviations, the second distance map indicating the area between the second contour of the segmented object in the second volume image and the envelope around the first contour of the segmented object in the first volume image defined by the determined distances. The circuitry may be further configured to visualize the area indicated by the second distance map in the derived two-dimensional image. This helps the user to quickly recognize potential deviations between the intervention and the planning.

In another embodiment the circuitry is further configured to determine one or more critical areas where the determined deviations indicate that the determined distance from a first contour of the segmented object in the first volume image is different than a distance between the first contour in the first volume image and the second contour in the second volume image. The determined one or more critical areas may particularly be highlighted in the derived two-dimensional image to enable quick recognition by the user.

According to another embodiment the circuitry is further configured to derive two or more two-dimensional images from the first volume image in two or more different desired planes through the first volume image and to visualize the derived two or more two-dimensional images and the determined distances from the first contour of the segmented object in the two or more two-dimensional images. The visualization of two or more 2D images further improves the user's ability to quickly and completely understand the success of an intervention compared to a corresponding planning.

In a practical implementation the circuitry is further configured to derive the two-dimensional image from the first volume image in a desired plane through the first volume image by projection of the first contour of the segmented object and the determined distances from the first contour of the segmented object onto said desired plane.

### BRIEF DESCRIPTION OF THE DRAWINGS

These and other aspects of the invention will be apparent from and elucidated with reference to the embodiment(s) described hereinafter. In the following drawings
Fig. 1 shows an embodiment of an imaging system in which the image processing device and method according to the present invention may be used;
Fig. 2 shows a flowchart of a first embodiment of an image processing method according to the present invention;
Fig. 3 shows a flowchart of a first embodiment of an image processing method according to the present invention;
Fig. 4 shows a diagram illustrating two contours in a plane;
Fig. 5 shows a diagram illustrating two volumes and a cutting plane;
Fig. 6 shows a diagram illustrating a projection onto the cutting plane shown in Fig. 5;
Fig. 7 shows a diagram illustrating a projection onto the cutting plane shown in Fig. 5 with an incomplete visualization; and
Fig. 8 shows a diagram illustrating a projection onto the cutting plane shown in Fig. 5 with a complete visualization as enabled by an embodiment of the present invention.

### DETAILED DESCRIPTION OF EMBODIMENTS

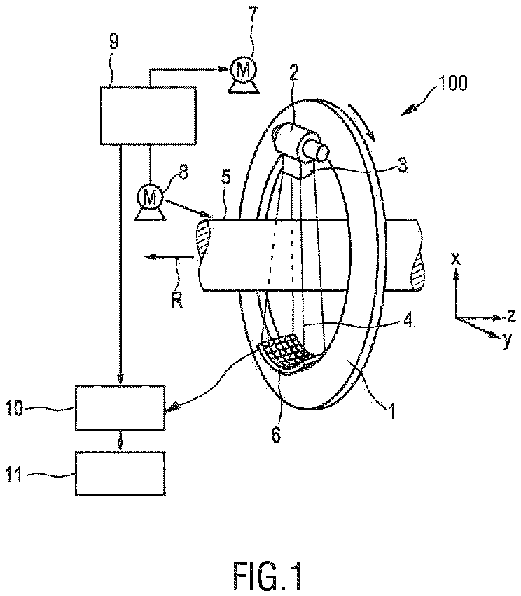

Fig. 1 shows schematically and exemplarily an imaging apparatus 100, in this example a computed tomography (CT) apparatus, according to the present invention for imaging an object. The CT apparatus 100 includes a gantry 1, which is capable of rotation about a rotational axis R, which extends parallel to a z direction. A radiation source 2 (also called photon source) is mounted on the gantry 1. The radiation source 2 is generally provided with a collimator 3, which forms a radiation beam 4 from the radiation (photons) generated by the radiation source 2. The radiation traverses an object of examination, such as a patient, arranged in an imaging area 5 (also called examination zone or area of examination), which is, in this embodiment, cylindrical. After having traversed the imaging area 5, the radiation beam 4 is incident on a detection unit 6, which comprises a two- dimensional detection surface. The detection unit 6 is also mounted on the gantry 1.

The CT apparatus 100 comprises two motors 7, 8. The gantry 1 is driven at a preferably constant but adjustable angular speed by the motor 7. The motor 8 is provided for displacing the object, for example, a patient, who is arranged on a patient table in the imaging area 5, parallel to the direction of the rotational axis R or the z axis. These motors 7, 8 are controlled by a control unit 9, for instance, such that the radiation source 2, the detection unit 6 and the imaging area 5 move relative to each other along a helical directory. However, it is also possible that the object is not moved, but that only the radiation source 2 and the detection unit 6 are rotated, i.e. that the radiation source 2 moves along a circular trajectory relative to the object or the imaging area 5.

During a relative movement of the radiation source 2 and the imaging area 5, the detection unit 6 generates detection values (preferably one detection value per pixel, i.e. per detection element of a preferably two-dimensional array of detection elements) depending on the radiation incident on the detection surface of the detection unit 6. The detection values are preferably provided to a reconstruction unit 10 for reconstructing an image of the object based on the detection values. The image reconstructed by the reconstruction unit 10 may be provided to a display unit 11 for displaying the reconstructed image. The control unit 9 is preferentially also adapted to control the radiation source 2, the detection unit 6 and the reconstruction unit 10.

The image processing device according to the present invention may correspond or may be part of the reconstruction unit 10. In other embodiments the image processing device may be implemented as separate device. The reconstruction unit and the image processing device may be implemented by common circuitry, such as a common processor, computer or other hard- and/or software. For instance, a common image processor may be used that is programmed accordingly to carry out the functions of the reconstruction unit and the image processing device. In other embodiments, separate circuitry, such as separate processors, computers or other hard- and/or software, may be provided to implement the respective functions.

It shall be noted that the present invention is not limited to use in a CT apparatus as shown in Fig. 1, but the present invention may be used in other imaging apparatus as well, such as in a cone beam CT apparatus, an MRI apparatus, an x-ray apparatus (e.g. using a C-arm gantry), or an ultrasound imaging apparatus.

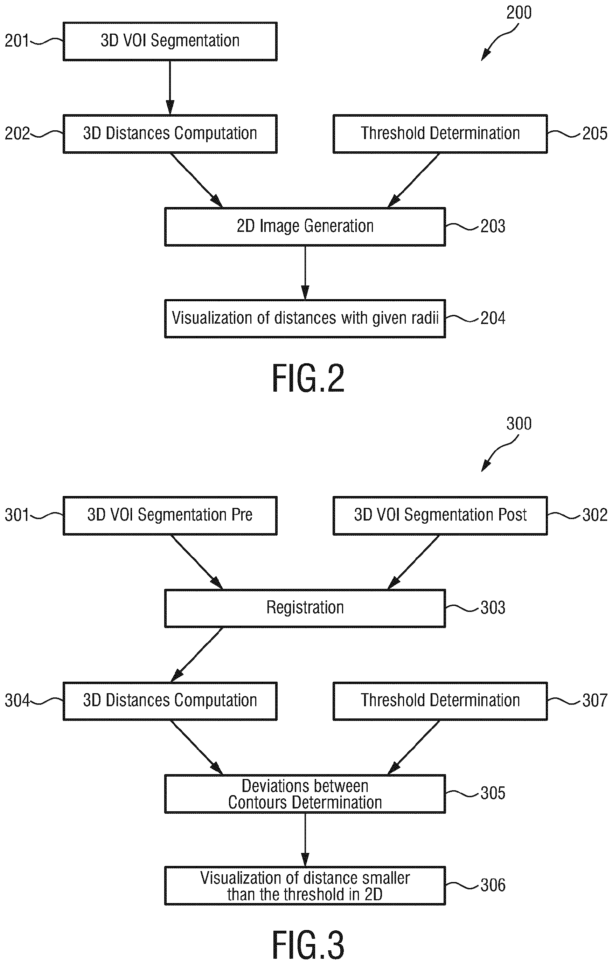

Fig. 2 shows a flowchart of a first embodiment of an image processing method 200 according to the present invention. This embodiment is particularly directed to the planning of an intervention, i.e. an assessment prior to a treatment.

In a first step 201 a volumetric segmentation is applied on a first volume image of an area of examination including an object of interest to segment said object. The area of examination may e.g. be a certain body area of the patient, such as heart region, abdomen, brain, etc., and the object of interest may e.g. be an organ of interest, a lesion, a tumor or any other specific tissue. A volumetric segmentation on one image or a series of volume images may optionally be applied in this step.

In a second step 202 distances from a first contour of the segmented object in the first volume image are determined based on a predetermined threshold. The threshold may be predefined or a default threshold, optionally a threshold that is set or selected based on one or more of the particular type of intervention, type of patient, type of object of interest, etc.. In other embodiments the threshold may be set by a user in a separate step 205.

In a third step 203 a two-dimensional image is derived from the first volume image in a desired plane through the first volume image. For instance a slice image may be generated from a 3D image data set, wherein the slice image may be a cut image through the first volume image in a desired plane or a projection image of the first volume image onto the desired plane.

In a fourth step 204 the derived two-dimensional image and the determined distances from the first contour of the segmented object in the derived two-dimensional image are visualized.

This visualization enables a user to recognize treatment margins (a resection/ablation margin set based on user pre-defined thresholds) at a specific point in time on a specific plane taking into account the 3D shape of the object of interest (e.g. a tumor) so that the user can verify if a planned treatment requires any modification, on which path a medical instrument may be inserted, etc..

In an embodiment of the method 200 a first distance map may be generated based on the determined distances indicating the area between the first contour of the segmented object in the first volume image and an envelope around the first contour defined by the determined distances.

Fig. 3 shows a flowchart of a second embodiment of an image processing method 300 according to the present invention. This embodiment is particularly directed to a two time points assessment / evaluation of an intervention, i.e. an assessment post treatment compared to e.g. a situation prior to treatment or during treatment. Some of the steps correspond to steps of the method 200 shown in Fig. 2, some other steps are added.

In a first step 301 a volumetric segmentation is applied (e.g. prior to any treatment) on a first volume image of an area of examination including an object of interest to segment said object. Step 301 substantially corresponds to step 201.

In a second step 302 a volumetric segmentation is applied (e.g. after a treatment) on a second volume image of said area of examination to segment said object of interest. The second volume image is generally acquired at a later point in time (e.g. after the treatment) than the first volume image (which is e.g. acquired before any treatment or during the treatment, e.g. after a first step of the treatment).

In a third step 303 the first and second volume images are registered to each other.

In a fourth step 304 distances from a first contour of the segmented object in the first volume image are determined based on a predetermined threshold. Step 304 substantially corresponds to step 202. Like in the method 200, the threshold may be predefined, or a default threshold, or may be set by a user in a separate step 307 that substantially corresponds to step 205.

In a fifth step 305 deviations are determined between a second contour of the segmented object in the second volume image and the determined distances from the first contour of the segmented object in the first volume image.

In a sixth step 306 the deviations are visualized in the derived two-dimensional image in addition to the determined distances from the first contour of the segmented object. Step 306 thus includes steps 203 and 204 according to which the two-dimensional image in a desired plane through the first volume image is generated and visualized together with the determined distances from the first contour of the segmented object.

The method 300 may thus be used as a follow-up evaluation. It includes two cases of comparison. The 3D VOI (also called VOI Pre) of a first scan is registered to the 3D VOI (also called VOI post) of a second (later) scan. Based on a predefined threshold the required distance for the first time point is calculated. On the follow-up segmented object the system evaluates if the actual distance was performed. The result, which may be generated and visualized as a map, represents an area treated and areas that should have been treated. For instance, areas that were not treated (e.g. not ablated) may be highlighted in the 2D slices.

In an embodiment of the method 300 a second distance map may be generated based on the determined deviations, the second distance map indicating the area between the second contour of the segmented object in the second volume image and the envelope around the first contour of the segmented object in the first volume image defined by the determined distances. The idea is that the follow-up segmentation (post procedure) is placed on top of the planned image to identify untreated areas. The second distance map is thus highlighting the untreated areas and represents a new distance map that is generated

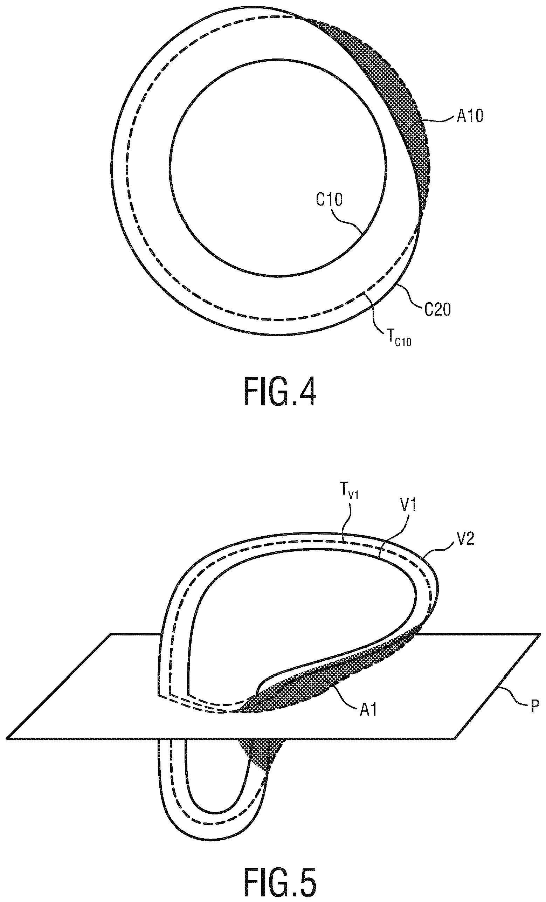

The operation and effect of the present invention shall be illustrated by use of Figs. 4 to 8. First, an area in a 2D space will be visualized, which is easier to understand. Afterwards, the problem and the solution will be visualized in a 3D space.

Fig. 4 shows a diagram illustrating two contours C10 and C20 in a plane, i.e., an area in a 2D space. The visualization of distances between two contours in such a 2D space is intuitive. The two contours are defined as C10(x, y) and C20(x, y), and a threshold function based on C10 is defined as T_{C10}(x, y). As an example, a threshold function T_{C10}(x, y) can be all points that are outside of C10 and their longest distance from any point in C10 is 3. If C10 is a circle with radius 5 (i.e. C10: x²+y²=25), then the threshold function would be a circle, concentric to C10 and radius 8, or, as a mathematical expression T_{C10}: x²+y²=64. The threshold function T_{C10} may also be understood as defining an envelope around the contour C1.

The aim is to know if there are any areas where C20(x, y) is inside T_{C10}(x, y). In the example depicted in Fig. 4 area A1 is such an area where C20(x, y) is inside T_{C10}(x, y). This area A10 may hence be highlighted, e.g. marked with any color or pattern, as shown in Fig. 4 so that a user can easily and quickly recognize it.

Fig. 5 shows a diagram illustrating two volumes V1 and V2 and a cutting plane P, i.e., a plane through a 3D space. This demonstrates how 3D areas are previewed in a 2D space. Two VOIs are defined as V1(x, y, z) and V2(x, y, z), and a threshold function is defined as T_{V1}(x, y, z), all in the 3D space. The threshold function T_{V1} may also be understood as defining an envelope around the volume V1. The aim is to know if there are any areas where V2(x, y, z) is inside T_{V1}(x, y, z). In the example depicted in Fig. 5 area A1 is such an area where V2(x, y, z) is inside T_{V1}(x, y, z). This area A1 may hence be highlighted.

In a practical scenario, V1 represents a tumor at baseline prior to treatment (e.g. ablation), T_{V1} represents the recommended area for ablation, C2 is the second time point segmented tumor represented the result of the actually treated (i.e. ablated) area post procedure. The highlighted area A1 is the area which is smaller than the recommended ablation/treatment/resection area, i.e. this area was supposed to be part of the treated area but was actually not treated.

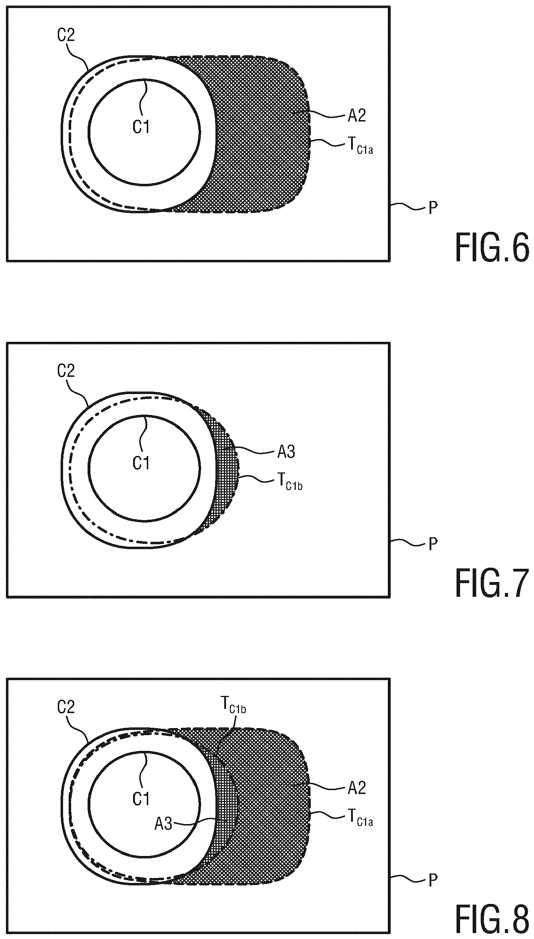

The contour formed by the intersection of V1 with the plane P may be defined as C1 and the contour formed by the intersection of V2 with the plane P may be defined as C2. The projection in the plane P the looks as depicted in Fig. 6 showing a diagram illustrating a projection onto the cutting plane P shown in Fig. 5. In this 2D illustration of the cutting plane P the region A2 between T_{V1} and V2 is highlighted since it represents regions in which V2 is located in a distance from V1 smaller than the threshold T_{V1}, i.e., regions where V2 is inside T_{V1}.

However, the visualization of the area A2 where V2 is outside T_{V1} can be confusing. For instance, if the threshold function T_{V1}(x, y, z) was defined, as explained above with reference to Fig. 4, as a distance d from V1, the highlighted area A2 in Fig. 6 is bigger than the definition. This is a result of the influence from the rest of regions of V1 outside of the plane P.

In other words, in a practical scenario, Fig. 6 shows the threshold determined by T_{c1a} in 3D space. Taking into account the shape of the tumor in 3D, there are some "points" that are invisible in this specific plane (but visible in the VOI representation). An image is generated in this specific plane that identifies that there are more area(s) to treat due to the 3D structure of the tumor. The area between the first contour C1 and an envelope around the first contour defined by the determined distances (determined based on the threshold T_{c1a}) represents a first distance map.

Based only on Fig. 6, the highlighted regions, indicated as A3, would look as illustrated in Fig. 7 showing a diagram illustrating a projection onto the cutting plane P shown in Fig. 5 with an incomplete visualization. This image is clearly different from the image shown in Fig. 6. The reason is that only the information from the current projection is taken into account, and not the information from the entire VOI.

In other words, Fig. 7 shows the threshold based on a constant distance from C1 on plane P only. This method ignores the influence of the rest of the volume on the threshold contour. Thus, the area A3 is smaller than it should be.

Fig. 8 shows a diagram illustrating a projection onto the cutting plane shown in Fig. 5 with a complete visualization as enabled by an embodiment of the present invention. In this visualization the two images shown in Figs. 6 and 7 are, in some way (e.g. based on the series registration of the two volumes), merged together. This visualization shows the highlighted area A3 between the threshold T_{C1b} and the contour C2 from the projection (2D) shown in Fig. 7, e.g. highlighted in one color (pattern), and the area A2 between the threshold T_{C1a} and the contour C2 resulting from the entire system (3D) in another color (pattern). The area between the second contour C2 and the envelope around the first contour C1 defined by the determined distances (determined based on the threshold T_{c1a}) represents a second distance map. Hence, the combined image as depicted in Fig. 8 represents the full information needed to evaluate if the treatment was performed as planned and that the resection margins were treated properly.

In the explanations provided above a single image is generated for a single plane. The same operation may be carried out for one or more further planes. Thus, two or more two-dimensional images may be derived from the first volume image in two or more different desired planes through the first volume image. The derived two or more two-dimensional images and the determined distances from the first contour of the segmented object in the two or more two-dimensional images may then be visualized to provide further insights for the user.

The present invention may generally be applied with different imaging modalities, i.e., the volume image may be image data (in particular a 3D image data set) of different imaging modalities, such as CT, MR, ultrasound, X-ray, etc. and may be acquired with different types of imaging apparatuses, such as a CT apparatus, an MR apparatus, an ultrasound apparatus, an X-ray apparatus, etc.. Applications of the invention include, but are not limited to, procedure planning and procedure assessment, e.g. ablation (RF, Cryo), lesion dissection, etc..

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Image processing device comprising circuitry configured to carry out the steps of
- applying a volumetric segmentation on a first volume image of an area of examination including an object of interest to segment said object;
- determining distances from a first contour of the segmented object in the first volume image based on a predetermined threshold;
- deriving a two-dimensional image from the first volume image in a desired plane through the first volume image; and
- visualizing the derived two-dimensional image and the determined distances from the first contour of the segmented object in the derived two-dimensional image.

2. Image processing device as claimed in claim 1,
wherein the circuitry is further configured to generate a first distance map based on the determined distances indicating the area between the first contour of the segmented object in the first volume image and an envelope around the first contour defined by the determined distances.

3. Image processing device as claimed in claim 2,
wherein the circuitry is further configured to visualize the area indicated by the first distance map in the derived two-dimensional image.

4. Image processing device as claimed in any one of the preceding claims,
wherein the circuitry is further configured to receive a user input setting the predetermined threshold or to use a default threshold or a threshold defined in advance.

5. Image processing device as claimed in any one of the preceding claims,
wherein the object of interest is a tumor or other tissue and the circuitry is further configured to determine the distances as margins needed for an intervention or planning, in particular an ablation and/or resection.

6. Image processing device as claimed in any one of the preceding claims,
wherein the circuitry is further configured to carry out the steps of
- applying a volumetric segmentation on a second volume image of said area of examination to segment said object of interest, said second volume image being acquired at a later point in time than the first volume image;
- registering the first and second volume images;
- determining deviations between a second contour of the segmented object in the second volume image and the determined distances from the first contour of the segmented object in the first volume image; and
- visualize the deviations in the derived two-dimensional image in addition to the determined distances from the first contour of the segmented object.

7. Image processing device as claimed in claim 6,
wherein the circuitry is further configured to generate a second distance map based on the determined deviations, the second distance map indicating the area between the second contour of the segmented object in the second volume image and the envelope around the first contour of the segmented object in the first volume image defined by the determined distances.

8. Image processing device as claimed in claim 7,
wherein the circuitry is further configured to visualize the area indicated by the second distance map in the derived two-dimensional image.

9. Image processing device as claimed in any one of claims 6 to 8,
wherein the circuitry is further configured to determine one or more critical areas where the determined deviations indicate that the determined distance from a first contour of the segmented object in the first volume image is different than a distance between the first contour in the first volume image and the second contour in the second volume image.

10. Image processing device as claimed in claim 9,
wherein the circuitry is further configured to highlight the determined one or more critical areas in the derived two-dimensional image.

11. Image processing device as claimed in any one of the preceding claims,
wherein the circuitry is further configured
- to derive two or more two-dimensional images from the first volume image in two or more different desired planes through the first volume image and
- to visualize the derived two or more two-dimensional images and the determined distances from the first contour of the segmented object in the two or more two-dimensional images.

12. Image processing device as claimed in any one of the preceding claims,
wherein the circuitry is further configured to derive the two-dimensional image from the first volume image in a desired plane through the first volume image by projection of the first contour of the segmented object and the determined distances from the first contour of the segmented object onto said desired plane.

13. Image processing method comprising the steps of:
- applying a volumetric segmentation on a first volume image of an area of examination including an object of interest to segment said object;
- determining distances from a first contour of the segmented object in the first volume image based on a predetermined threshold;
- deriving a two-dimensional image from the first volume image in a desired plane through the first volume image; and
- visualizing the derived two-dimensional image and the determined distances from the first contour of the segmented object in the derived two-dimensional image.

14. Computer program comprising program code means for causing a computer to carry out the steps of the method as claimed in claim 13 when said computer program is carried out on the computer.
